# EUROPEAN PATENT APPLICATION

(11) **EP 2 983 394 A1**
(43) Date of publication of application: **10.02.2016**
(21) Application number: 13881192.2
(22) Date of filing: 03.04.2013
(51) Int. Cl.: H04W 24/00

(54) **INFORMATION PROCESSING METHOD, MEASUREMENT REPORT TRIGGERING METHOD AND APPARATUS THEREOF, AND COMMUNICATIONS SYSTEM**

(71) Applicant: Fujitsu Limited, Kawasaki-shi, Kanagawa 211-8588 (JP)
(72) Inventor: WANG, Weiwei, Beijing 100025 (CN); LI, Zhaojun, Beijing 100025 (CN); XU, Haibo, Beijing 100025 (CN); CHANG, Ningjuan, Beijing 100025 (CN)
(74) Representative: Fenlon, Christine Lesley
(86) International application number: PCT/CN2013/073693
(87) International publication number: WO 2014/161167

(57) **Abstract**

An information processing method, a method for determining a cause of connection failure and apparatuses thereof and a communication system. The method includes ignoring a current connection failure by UE when the UE determines that the current connection failure is resulted from in-device coexistence interference or from continuous receiving of an MBMS, and recording no information; or recording related information of the current connection failure. Furthermore, when the UE is reconnected to a network, the related information may be reported to the network side, and after a cause of connection failure is finally determined and the base station correcting network parameters causing the failure obtains the above information, the network side may be assisted according to the information in correcting or avoiding a connection failure of the UE.

## Description

### Technical Field

The present disclosure relates to the field of communications, and in particular to an information processing method, a method for triggering a measurement report and an apparatuses thereof and a communication system.

### Background

In an existing mechanism, after a connection failure occurs in UE, the UE will provide some assistant information to a network side to assist it to determine a cause for the connection failure and avoid an occurrence of such a connection failure by changing parameters. For example, the connection failure may include a radio link failure (RLF) and a handover failure (HOF).

Currently, the information provided to the network side after the connection failure occurs in the UE includes: ID of a cell to which the UE belongs before and after the connection failure occurs, and a measurement result when the failure occurs, etc.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

At present, in an actual system, a connection failure may be resulted from other causes, such as being resulted from in-device coexistence interference at a terminal side or from continuous receiving of a multimedia broadcast multicast service (MBMS), but not from improperness of setting of network parameters. However, in an existing mechanism, after the connection failure, the information provided to the network side by the UE includes ID of a cell to which the UE belongs before and after the connection failure occurs, and a measurement result when the failure occurs, etc., but that causes for some connection failures are in-device coexistence interference at a terminal side or continuous receiving of an MBMS is ignored. If a case of the connection failure is notified to the network side according to the existing mechanism, the network side cannot acquire these causes, and hence cannot take proper measures to avoid connection failures resulted from these causes, thereby making it possible that correct network parameters are adjusted improperly.

Therefore, embodiments of the present disclosure provide an information processing method, a method for triggering a measurement report and apparatuses thereof and a communication system. With these methods, the network side is made to ignore information related to in-device coexistence interference or continuous receiving of an MBMS, or the information related to in-device coexistence interference or continuous receiving of an MBMS is taken as a factor for assisting the network side in correcting or avoiding a connection failure.

According to a first aspect of the embodiments of the present disclosure, there is provided an information processing method, including:
recording information on the following by UE when a connection failure occurs in the UE:
   a cell of which a measurement report is triggered by the UE in a serving cell before occurrence of a current connection failure and/or within a predetermined period of time before occurrence of a current connection failure; and/or
   a time when the UE triggers a measurement report of a cell for the first time in a serving cell before occurrence of a current connection failure and/or within a predetermined period of time before occurrence of a current connection failure, and/or a time duration between triggering a measurement report of a cell for the first time and an occurrence of a current connection failure.

According to a second aspect of the embodiments of the present disclosure, there is provided an information processing apparatus, including:
a first determining unit configured to determine whether a connection failure occurs; and
a first information processing unit configured to record information on the following when a determination result of the first determining unit is yes:
a cell of which a measurement report is triggered by the UE in a serving cell before occurrence of a current connection failure and/or within a predetermined period of time before occurrence of a current connection failure; and/or
a time when the UE triggers a measurement report of a cell for the first time in a serving cell before occurrence of a current connection failure and/or within a predetermined period of time before occurrence of a current connection failure, and/or a time duration between triggering a measurement report of a cell for the first time and an occurrence of a current connection failure.

According to a third aspect of the embodiments of the present disclosure, there is provided UE, including the apparatus as described in the second aspect of the embodiments of the present disclosure.

According to a fourth aspect of the embodiments of the present disclosure, there is provided an information processing method, including:
ignoring a current connection failure or recording related information of a current connection failure by UE when the UE determines that the current connection failure is resulted from in-device coexistence interference or from ensuring continuous receiving of an MBMS, or the UE determines that the UE transmits information related to in-device coexistence interference or transmits information on assisting a network side in ensuring continuous receiving of an MBMS before occurrence of the current connection failure.

According to a fifth aspect of the embodiments of the present disclosure, there is provided an information processing apparatus, including:
a second determining unit configured to determine whether a current connection failure of UE is resulted from in-device coexistence interference or from ensuring continuous receiving of an MBMS, or whether the UE transmits information related to in-device coexistence interference or information on assisting a network side in ensuring continuous receiving of an MBMS before occurrence of the current connection failure;
a second processing unit configured to ignore the current connection failure or record related information of the current connection failure when a determination result of the second determining unit is yes.

According to a sixth aspect of the embodiments of the present disclosure, there is provided UE, including the apparatus as described in the fifth aspect of the embodiments of the present disclosure.

According to a seventh aspect of the embodiments of the present disclosure, there is provided an information processing method, including: receiving information transmitted by UE or other base stations at a network side, the information comprising one or more pieces of the following information:
information recorded by the UE when a connection failure occurs, wherein the recorded information includes: a cell of which a measurement report is triggered by the UE in a serving cell before occurrence of a current connection failure and/or within a predetermined period of time before occurrence of a current connection failure; and/or
a time when the UE triggers a measurement report of a cell for the first time in a serving cell before occurrence of a current connection failure and/or within a predetermined period of time before occurrence of a current connection failure, and/or a time duration between triggering a measurement report of a cell for the first time and an occurrence of a current connection failure,
and/or information recorded by the UE when the UE determines that the current connection failure is resulted from in-device coexistence interference or from ensuring continuous receiving of an MBMS, or the UE determines that the UE transmits information related to in-device coexistence interference or transmits information on assisting a network side in ensuring continuous receiving of an MBMS before occurrence of the current connection failure, the information comprising related information of the current connection failure;
transmitting the received information to the network side, or ignoring the received information, or taking the information as a factor for assisting the network side in correcting or avoiding a connection failure.

According to an eighth aspect of the embodiments of the present disclosure, there is provided an information processing apparatus, including:
a first receiving unit configured to receive information transmitted by UE or other base stations at a network side, the information comprising one or more pieces of the following information:
   information recorded by the UE when a connection failure occurs, wherein the recorded information includes: a cell of which a measurement report is triggered by the UE in a serving cell before occurrence of a current connection failure and/or within a predetermined period of time before occurrence of a current connection failure; and/or
   a time when the UE triggers a measurement report of a cell for the first time in a serving cell before occurrence of a current connection failure and/or within a predetermined period of time before occurrence of a current connection failure, and/or a time duration between triggering a measurement report of a cell for the first time and an occurrence of a current connection failure,
   and/or information recorded by the UE when the UE determines that the current connection failure is resulted from in-device coexistence interference or from ensuring continuous receiving of an MBMS, or the UE determines that the UE transmits information related to in-device coexistence interference or transmits information on assisting a network side in ensuring continuous receiving of an MBMS before occurrence of the current connection failure, the information comprising related information of the current connection failure;
   a third processing unit configured to transmit the received information to the network side, or ignore the received information, or take the related information of the current connection failure as a factor for assisting the network side in correcting or avoiding a connection failure.

According to a ninth aspect of the embodiments of the present disclosure, there is provided a base station, including the apparatus as described in the eighth aspect of the embodiments.

According to a tenth aspect of the embodiments of the present disclosure, there is provided a communication system, including the above UE and base station.

According to an eleventh aspect of the embodiments of the present disclosure, there is provided an information processing method, including:
receiving, by a first base station, a radio link failure report transmitted by UE;
looking up context information of the UE according to information in the received radio link failure report;
determining, according to the context information, whether the UE transmits information related to in-device coexistence interference or whether the UE transmits information related to continuous receiving of an MBMS before occurrence of a connection failure; and
ignoring the information, or taking the information as a factor for assisting a network side in correcting or avoiding a connection failure, or transmitting the information related to in-device coexistence interference or the information related to continuous receiving of an MBMS to a network side, when a result of determination is yes;
   wherein,
the information related to in-device coexistence interference comprises: indication information indicating that the UE transmits information related to in-device coexistence interference before the connection failure, and/or information set in an InDeciveCoexindication message;
and the information related to continuous receiving of an MBMS comprises: indication information indicating that the UE transmits information on assisting a network side in ensuring continuous receiving of an MBMS before the current connection failure, and/or information set in an MBMSInterestIndication message.

According to a twelfth aspect of the embodiments of the present disclosure, there is provided an information processing method, including:
receiving, by a first base station, a radio link failure report transmitted by UE;
looking up context information of the UE according to the information in the received radio link failure report;
determining, according to the context information, whether a connection failure of the UE is resulted from in-device coexistence interference or from ensuring continuous receiving of an MBMS;
ignoring related information, or taking related information as a factor for assisting a network side in correcting or avoiding the connection failure, or transmitting related information to a network side, when a determination result is yes;
   wherein,
when it is determined that the connection failure is resulted from in-device coexistence interference, the related information comprises: indication information indicating that the UE transmits information related to in-device coexistence interference before the connection failure, and/or indication information indicating that the connection failure is resulted from in-device coexistence interference, and/or information set in an InDeciveCoexindication message;
and when it is determined that the connection failure is resulted from ensuring continuous receiving of an MBMS, the related information comprises: indication information indicating that the UE transmits information on assisting a network side in ensuring continuous receiving of an MBMS before the current connection failure, and/or indication information indicating that the connection failure is resulted from ensuring continuous receiving of an MBMS, and/or information set in an MBMSInterestIndication message.

According to a thirteenth aspect of the embodiments of the present disclosure, there is provided an information processing apparatus, including:
a second receiving unit configured to receive a radio link failure report transmitted by UE;
a first information lookup unit configured to look up context information of the UE according to the information in the received radio link failure report;
a third determining unit configured to determine, according to the context information, whether the UE transmits information related to in-device coexistence interference or whether the UE transmits information related to continuous receiving of an MBMS before occurrence of a connection failure; and
a fourth information processing unit configured to ignore the information, or take related information as a factor for assisting a network side in correcting or avoiding a connection failure, or transmit the information related to in-device coexistence interference or the information related to continuous receiving of an MBMS to a network side, when a determination result of the third determining unit is yes;
wherein the information related to in-device coexistence interference comprises: indication information indicating that the UE transmits information related to in-device coexistence interference before the connection failure, and/or information set in an InDeciveCoexindication message;
and the information related to continuous receiving of an MBMS comprises: indication information indicating that the UE transmits information on assisting a network side in ensuring continuous receiving of an MBMS before the current connection failure, and/or information set in an MBMSInterestIndication message.

According to a fourteenth aspect of the embodiments of the present disclosure, there is provided an information processing apparatus, including:
a third receiving unit configured to receive a radio link failure report transmitted by UE;
a second information lookup unit configured to look up context information of the UE according to the information in the received radio link failure report;
a fourth determining unit configured to determine, according to the context information, whether a connection failure of the UE is resulted from in-device coexistence interference or from ensuring continuous receiving of an MBMS; and
a fifth information processing unit configured to ignore related information, or take related information as a factor for assisting a network side in correcting or avoiding the connection failure, or transmit related information to a network side, when a determination result is yes;
   wherein,
when it is determined that the connection failure is resulted from in-device coexistence interference, the related information comprises: indication information indicating that the UE transmits information related to in-device coexistence interference before the connection failure, and/or indication information indicating that the connection failure is resulted from in-device coexistence interference, and/or information set in an InDeciveCoexindication message;
and when it is determined that the connection failure is resulted from ensuring continuous receiving of an MBMS, the related information comprises: indication information indicating that the UE transmits information on assisting a network side in ensuring continuous receiving of an MBMS before the current connection failure, and/or indication information indicating that the connection failure is resulted from ensuring continuous receiving of an MBMS, and/or information set in an MBMSInterestIndication message.

According to a fifteenth aspect of the embodiments of the present disclosure, there is provided a base station, including the information processing apparatus as described in the thirteenth or fourteenth aspect of the embodiments.

According to a sixteenth aspect of the embodiments of the present disclosure, there is provided a communication system, including UE for transmitting a radio link failure report, wherein the communication system further includes the above base station.

According to a seventeenth aspect of the embodiments of the present disclosure, there is provided a method for triggering a measurement report, including:
triggering a measurement report of a neighboring cell providing an MBMS by UE when signal strength or signal quality of the neighboring cell providing an MBMS is greater than a first predetermined value, or a difference between signal strength or signal quality of the neighboring cell providing an MBMS and signal strength or signal quality of a serving cell is greater than a second predetermined value.

According to an eighteenth aspect of the embodiments of the present disclosure, there is provided a method for triggering a measurement report, including:
containing, by UE, signal strength or signal quality of a neighboring cell providing an MBMS in a measurement report of a neighboring cell with a frequency different from that of the neighboring cell providing an MBMS, for reporting to a network side, when the UE triggers the measurement report.

According to a nineteenth aspect of the embodiments of the present disclosure, there is provided a method for triggering a measurement report, including:
reporting a measurement result of at least one cell by UE to a target base station, when the UE is handed over from a source cell to the target cell and interruption occurs in an MBMS of the UE, or when the UE is handed over from a source cell to the target cell, interruption occurs in an MBMS of the UE and the UE is aware that there exists a cell providing the interrupted MBMS in cells controlled by the target base station;
wherein the measurement result refers to a measurement result of other neighboring cell obtained by the UE when the UE triggers a measurement report of handover from the source cell to the target cell.

According to a twentieth aspect of the embodiments of the present disclosure, there is provided an apparatus for triggering a measurement report, including:
a first triggering unit configured to trigger a measurement report of a frequency or a cell providing an MBMS when signal strength or signal quality of the neighboring cell providing an MBMS is greater than a first predetermined value, or signal strength or signal quality of the neighboring cell providing MBMSs and signal strength or signal quality of a serving cell is greater than a second predetermined value.

According to a twenty-first aspect of the embodiments of the present disclosure, there is provided an apparatus for triggering a measurement report, including:
a second triggering unit configured to contain signal strength or signal quality of a neighboring cell providing an MBMS in a measurement report of a neighboring cell with a frequency different from that of the neighboring cell providing an MBMS, for reporting to a network side, when UE triggers the measurement report.

According to a twenty-second aspect of the embodiments of the present disclosure, there is provided an apparatus for triggering a measurement report, including:
a third triggering unit configured to report a measurement result of at least one cell to a target base station, when UE is handed over from a source cell to the target cell and interruption occurs in an MBMS of the UE, or when UE is handed over from a source cell to the target cell, interruption occurs in an MBMS of the UE and the UE is aware that there exists a cell providing the interrupted MBMS in cells controlled by the target base station;
wherein the measurement result refers to a measurement result of other neighboring cell obtained by the UE when the UE triggers a measurement report of handover from the source cell to the target cell.

According to a twenty-third aspect of the embodiments of the present disclosure, there is provided UE, including the above apparatus for triggering a measurement report.

According to a twenty-fourth aspect of the embodiments of the present disclosure, there is provided a communication system, including the above UE.

An embodiment of the present disclosure further provides a computer-readable program, wherein when the program is executed in an information processing apparatus or UE, the program enables a computer to carry out the above information processing method in the information processing apparatus or the UE.

An embodiment of the present disclosure further provides a storage medium in which a computer-readable program is stored, wherein the computer-readable program enables a computer to carry out the above information processing method in an information processing apparatus or UE.

An embodiment of the present disclosure further provides a computer-readable program, wherein when the program is executed in an information processing apparatus or a base station, the program enables a computer to carry out the above information processing method in the information processing apparatus or the base station.

An embodiment of the present disclosure further provides a storage medium in which a computer-readable program is stored, wherein the computer-readable program enables a computer to carry out the above information processing method in an information processing apparatus or a base station.

An embodiment of the present disclosure further provides a computer-readable program, wherein when the program is executed in an apparatus for triggering a measurement report or UE, the program enables a computer to carry out the above method for triggering a measurement report in the apparatus for triggering a measurement report or the UE.

An embodiment of the present disclosure further provides a storage medium in which a computer-readable program is stored, wherein the computer-readable program enables the computer to carry out the above method for triggering a measurement report in an apparatus for triggering a measurement report or UE.

An advantage of the embodiments of the present disclosure exists in that when the connection failure of the UE is resulted from in-device coexistence interference or from continuous receiving of MBMSs, the network side may ignore the information related to the in-device coexistence interference or the continuous receiving of MBMSs, or take the information related to the in-device coexistence interference or the continuous receiving of MBMSs as a factor for assisting the network side in correcting or avoiding a connection failure.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present disclosure, which constitute a part of the specification and illustrate the preferred embodiments of the present disclosure, and are used for setting forth the principles of the present disclosure together with the description. It is obvious that the accompanying drawings in the following description are some embodiments of the present disclosure only, and a person of ordinary skill in the art may obtain other accompanying drawings according to these accompanying drawings without making an inventive effort. In the drawings:
Figure 1 is a flowchart of an information processing method of Embodiment 1 of the present disclosure;
Figure 2 is a flowchart of an information processing method of Embodiment 2 of the present disclosure;
Figure 3 is a flowchart of an information processing method of Embodiment 3 of the present disclosure;
Figure 4 is a flowchart of an information processing method of Embodiment 4 of the present disclosure;
Figure 5 is a flowchart of an information processing method of Embodiment 5 of the present disclosure;
Figure 6 is a schematic diagram of a structure of an information processing apparatus of Embodiment 6 of the present disclosure;
Figure 7 is a schematic diagram of a structure of an information processing apparatus of Embodiment 7 of the present disclosure;
Figure 8 is a schematic diagram of a structure of an information processing apparatus of Embodiment 8 of the present disclosure;
Figure 9 is a schematic diagram of a structure of an information processing apparatus of Embodiment 9 of the present disclosure;
Figure 10 is a schematic diagram of a structure of an information processing apparatus of Embodiment 10 of the present disclosure;
Figure 11 is a flowchart of an information processing method of Embodiment 11 of the present disclosure;
Figure 12 is a schematic diagram of a structure of an information processing apparatus of Embodiment 12 of the present disclosure;
Figure 13 is a flowchart of an information processing method of Embodiment 13 of the present disclosure; and
Figure 14 is a schematic diagram of a structure of an information processing apparatus of Embodiment 14 of the present disclosure.

### Detailed Description of the Disclosure

Various embodiments of the present disclosure shall be described below with reference to the accompanying drawings. These embodiments are illustrative only, and are not intended to limit the present disclosure.

At present, in an actual system, a connection failure may be resulted from in-device coexistence interference at a terminal side or from continuous receiving of an MBMS. However, in an existing mechanism, after the connection failure, the information provided to the network side by UE includes ID of a cell to which the UE belongs before and after the connection failure occurs, and a measurement result when the failure occurs, etc., but that causes for some connection failures are in-device coexistence interference at a terminal side or continuous receiving of an MBMS are ignored. If a case of the connection failure is notified to the network side according to the existing mechanism, the network side cannot acquire these causes, and hence cannot take proper measures to avoid connection failures resulted from these causes, thereby making it possible that correct network parameters are adjusted improperly.

An embodiment of the present disclosure provides an information processing method. With this method, after a connection failure occurs in UE, if the connection failure is resulted from in-device coexistence interference or continuous receiving of an MBMS, the UE may report related information to a network side, so that the network side may ignore information related to the in-device coexistence interference or continuous receiving of an MBMS into account in correcting or avoiding a connection failure, or take the information related to the in-device coexistence interference or continuous receiving of an MBMS as a factor for assisting the network side in correcting or avoiding a connection failure. The information processing method, method for determining causes for connection failure and apparatuses thereof and the communication system of the embodiments of the present disclosure shall be described below with reference to the accompanying drawings.

### Embodiment 1

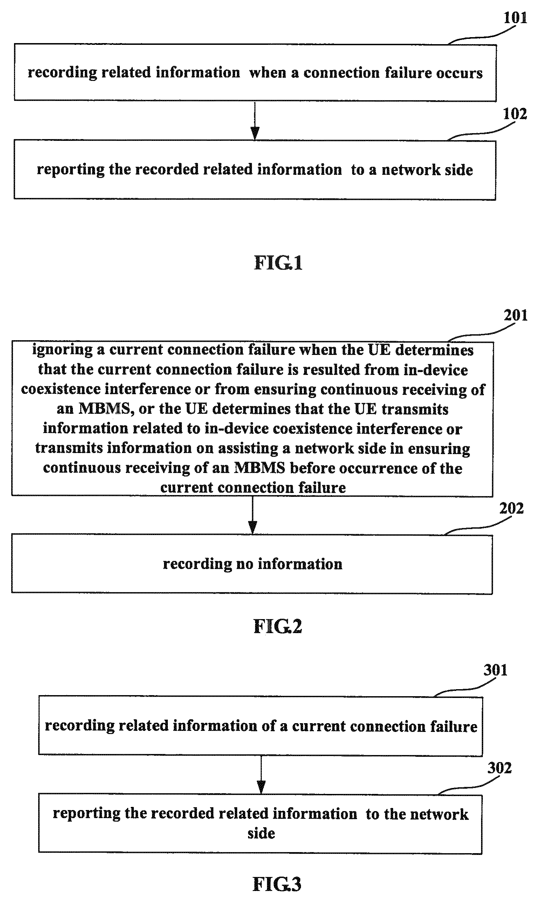

Fig. 1 is a flowchart of an information processing method of Embodiment 1 of the present disclosure. At a terminal side, as shown in Fig. 1, the method includes:
step 101: recording information on the following by UE when a connection failure occurs in the UE:
   a cell of which a measurement report is triggered by the UE in a serving cell before occurrence of a current connection failure and/or within a predetermined period of time before occurrence of a current connection failure; and/or
   a time when the UE triggers a measurement report of a cell for the first time in a serving cell before occurrence of a current connection failure and/or within a predetermined period of time before occurrence of a current connection failure, and/or a time duration between triggering a measurement report of a cell for the first time and an occurrence of a current connection failure;
   in this embodiment, when the connection failure, such as an RLF or an HOF, occurs in the UE, the above related information may be recorded in a cell list;
step 102: reporting the recorded information by the UE to a network side after the UE is reconnected to the network;
in the above embodiment, step 102 is optional, and is executed only after the connection failure occurs in the UE and the UE is reconnected to the network.

In this embodiment, after receiving the above related information, the network side may forward the above related information to a base station finally determining a cause of the connection failure and correcting network parameters from which the connection failure is resulted (such as forwarding the above related information to the base station via a radio link failure (RLF) indication message in TS36.423 v11.3.0 and/or a handover (HO) report message). Hence, after receiving the above related information, the base station may determine a cause of the connection failure. For example, if the time duration between triggering the measurement report and the occurrence of the connection failure is relatively large, the base station will deem that in handing over the UE, the time spent in handover preparation is too long, or the time for waiting before the handover preparation is too long, and the base station will shorten the time for handover preparation or the time for waiting before the handover preparation, thereby solving the problem existing in an existing mechanism.

### Embodiment 2

Fig. 2 is a flowchart of an information processing method of Embodiment 2 of the present disclosure. At a terminal side, as shown in Fig. 2, the method includes:
step 201: ignoring a current connection failure or recording related information of a current connection failure by UE when the UE determines that the current connection failure is resulted from in-device coexistence interference or from ensuring continuous receiving of an MBMS, or the UE determines that the UE transmits information related to in-device coexistence interference or transmits information on assisting a network side in ensuring continuous receiving of an MBMS before occurrence of the current connection failure;
in this embodiment, the MBMS may be an MBMS being received by the UE or an MBMS which are interested in receiving by the UE; however, there are not limited thereto;
step 202: recording no information by the UE.

In this embodiment, before the connection failure occurs, the information transmitted by the UE and related to the in-device coexistence interference refers to information in in-device coexistence indication message, such as information defined in InDeciveCoexindication message defined in TS36.331 v11.2.0, such as a list of frequencies interfered by in-device coexistence, and TDM assistant information, etc., which shall not be described herein any further.

In this embodiment, the information on assisting the network side in ensuring continuous receiving of an MBMS transmitted by the UE before the occurrence of the current connection failure includes MBMS interest indication information, and the MBMS interest indication information may be an MBMSInterestIndication massage defined in TS36.331 v11.2.0, such as a list of frequencies providing a user-interested MBMS, and an indicator indicating priorities of an MBMS and unicast services, which shall not be described herein any further.

It can be seen from the above embodiment that the UE does not record the above information and does not report the above information to the network side, thereby ensuring that the network side will not be affected by in-device coexistence interference or continuous receiving of in MBMS in determining a cause of connection failure.

### Embodiment 3

Fig. 3 is a flowchart of an information processing method of Embodiment 3 of the present disclosure. At a terminal side, as shown in Fig. 3, the method includes:
step 301: recording related information of a current connection failure by UE when the UE determines that the current connection failure is resulted from in-device coexistence interference or from ensuring continuous receiving of an MBMS, or the UE determines that the UE transmits information related to in-device coexistence interference or transmits information on assisting a network side in ensuring continuous receiving of an MBMS before occurrence of the current connection failure; and
step 302: reporting the recorded information of the current connection failure by the UE to the network side after the UE is reconnected to the network.

In this embodiment, the related information of the current connection failure may include information of the current connection failure, and/or information related to coexistence interference, and/or information related to an MBMS interest, which shall be described below by way of examples.

The information of the current connection failure may include one or more pieces of information defined in a VarRLF report storing related information on connection failure defined in TS36.331 v11.2.0. For example, the information may include ID of a cell to which the UE belongs when the connection failure occurs, and measurement results of a serving cell and a neighboring cell when the connection failure occurs. The information in the VarRLF report is incorporated herein, and shall not be described herein any further.

In this embodiment, when the current connection failure is resulted from the in-device coexistence interference or the UE transmits the information related to the in-device coexistence interference before the current connection failure occurs, the related information of the current connection failure may further include information related to the coexistence interference, the information related to the coexistence interference including indication information indicating that the information related to the in-device coexistence interference is transmitted before the current connection failure occurs, and/or indication information indicating that the current connection failure is resulted from the in-device coexistence interference, and/or information defined in the IndeviceCoexIndication message in TS36.331 v11.2.0, such as a list of frequencies interfered by in-device coexistence, and TDM assistant information, etc. The information defined in such a message is incorporated herein, and shall not be described herein any further.

In this embodiment, when the current connection failure is resulted from ensuring continuous receiving of an MBMS or the UE transmits the information on assisting the network side in ensuring continuous receiving of an MBMS before the current connection failure occurs, the related information of the current connection failure may further include the information related to the MBMS interest, the information related to the MBMS interest including indication information indicating that MBMS interest indication is transmitted before the current connection failure occurs, and/or indication information indicating that the current connection failure is resulted from ensuring continuous receiving of an MBMS, and/or information defined in the MBMSInterestIndication message in TS36.331 v11.2.0, such as a list of frequencies providing a user-interested MBMS, and an indicator indicating priorities of an MBMS and unicast services, etc. The information defined in such a message is incorporated herein, and shall not be described herein any further.

In this embodiment, the related information may be recorded in the following manners.

First, replacing related information of connection failure stored by the UE:
the related information on connection failure is recorded only once in the UE in the above manner of recording;
if before the UE transmits the information related to the in-device coexistence interference when the connection failure resulted from the in-device coexistence interference occurs or before the connection failure occurs, or transmits the information on assisting the network side in ensuring continuous receiving of an MBMS when the connection failure resulted from the continuous receiving of an MBMS (referred to as a second connection failure) occurs or before the connection failure occurs, a connection failure (referred to as a first connection failure) occurs before and information on the first connection failure (i.e. the information stored in the VarRLF report in TS36.331 v11.2.0) is still stored in the UE;
in this embodiment, the UE covers the stored information of the first connection failure, and saves the information of the second connection failure in the UE; wherein, the information of the second connection failure is as described above, and shall not be described herein any further.

Second, not covering the related information of connection failure stored by the UE:
the related information of connection failure is recorded more than one times in the UE in the above manner of recording, the related information of connection failure being as described above, and being not going to be described herein any further.

Likewise, step 302 is optional, and is executed only after the connection failure occurs in the UE and the UE is reconnected to the network.

It can be seen from this embodiment that after receiving the above related information, the network side may forward the above related information to a base station finally determining a cause of the connection failure and correcting network parameters from which the connection failure is resulted. For example, the UE forwards the above related information to the base station via a radio link failure (RLF) indication message in TS36.423 v11.3.0 and/or a handover (HO) report message. Hence, after receiving the above related information, the base station does not take the related information of the connection failure containing the related information related to the coexistence interference or the MBMS interest as a factor for assisting the network side in correcting or avoiding a connection failure, or may take the above related information of the connection failure as a factor for assisting the network side in correcting or avoiding a connection failure, thereby solving the problem existing in an existing mechanism.

### Embodiment 4

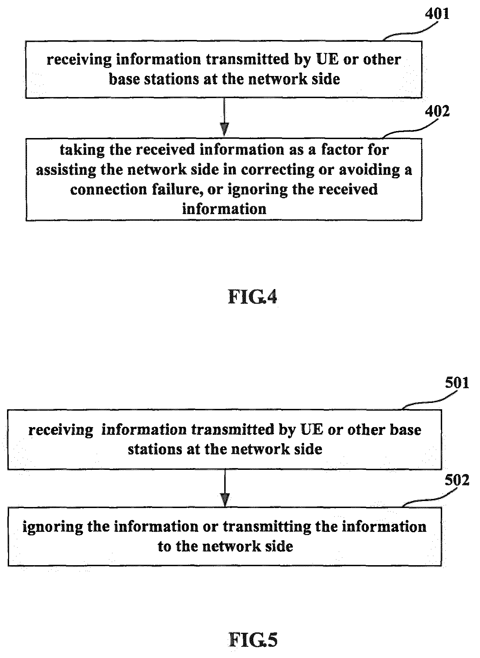

Fig. 4 is a flowchart of an information processing method of Embodiment 4 of the present disclosure. At a network side, for a base station finally determining a cause of the connection failure and correcting parameters, as shown in Fig. 4, the method includes:
step 401: receiving, by a base station at a network side, information transmitted by UE or other base stations at the network side;
in this embodiment, the information may include one or more pieces of the following information:
   1) the information described in Embodiment 1, which is recorded by the UE when a connection failure occurs; and
   2) the information described in Embodiment 3, which is recorded by the UE when the UE determines that a current connection failure is resulted from in-device coexistence interference or from ensuring continuous receiving of an MBMS, or the UE determines that the UE transmits information related to in-device coexistence interference or transmits information on assisting the network side in ensuring continuous receiving of an MBMS before occurrence of a current connection failure;
details of the above information are as described in embodiments 1 and 3, and shall not be described herein any further;
in this embodiment, the base station at the network side may be a base station finally determining a cause of the current connection failure and correcting network parameters from which the connection failure is resulted; hence, the base station may obtain the above information from the UE directly, and may also obtain the above information from other base stations at the network side, which is similar to the relevant art, and shall not be described herein any further;
step 402: taking the received information as a factor for assisting the network side in correcting or avoiding a connection failure, or ignoring the received information;
in this embodiment, after receiving the information described in Embodiment 1, the base station may take the received information as a factor for assisting the network side in correcting or avoiding a connection failure; for example, if the time duration between triggering the measurement report and the occurrence of the connection failure is relatively large, the base station will deem that in handing over the UE, the time spent in handover preparation is too long, or the time for waiting before the handover preparation is too long, and the base station will shorten the time for handover preparation or the time for waiting before the handover preparation;
in this embodiment, after receiving the information described in Embodiment 3, the base station may ignore the above information, and does not take the received information as a factor for assisting the network side in correcting or avoiding a connection failure; furthermore, the above information may also be taken as a factor for assisting the network side in correcting or avoiding a connection failure, which shall be described below by way of examples.
Example 1: after receiving the information described in Embodiment 3, the base station may ignore the above information, that is, not taking the information related to the in-device coexistence interference or the information related to the continuous receiving of an MBMS (such as the information related to the MBMS interest) as a factor for assisting the network side in correcting or avoiding a connection failure, so that the network side may accurately take corresponding measures to correct or avoid a connection failure, thereby solving the problem existing in an existing mechanism.
Example 2: after receiving the information described in Embodiment 3, the base station may determine whether the connection failure is resulted from the in-device coexistence interference or from ensuring continuous receiving of an MBMS; if yes, the base station ignores the above information, or take the information related to the in-device coexistence interference or the information related to the continuous receiving of an MBMS as a factor for assisting the network side in correcting or avoiding a connection failure.
Example 3: after receiving the information described in Embodiment 3, the base station may determine whether the connection failure is resulted from the in-device coexistence interference or from ensuring continuous receiving of MBMS; if yes, the base station may take the information related to the in-device coexistence interference or the information related to the continuous receiving of an MBMS as a factor for assisting the network side in correcting or avoiding a connection failure; otherwise, the base station performs determination and corrects the network parameters according to an existing mechanism.

For example, if the information contains information related to coexistence interference, the base station determines that the connection failure to which the information corresponds is resulted from the coexistence interference; thus, in dealing with handover of UE where there exists in-device coexistence interference, the base station may adjust handover parameters of the UE, so that the UE can be handed over in advance.

If the information contains information related to the MBMS interest, the cell to which the UE belongs when the UE is reconnected to the network is not a cell providing an MBMS in which the UE is interested indicated by the information related to the MBMS interest, and it is shown by the related information of the connection failure that a measurement result of the cell is relatively good when the connection failure occurs, the base station determines that the connection failure is resulted from ensuring continuous receiving of an MBMS; thus, in dealing with handover of UE needing to continuously receive an MBMS, the base station may adjust time for waiting for the measurement result of the cell providing the MBMS; and if no measurement result is received within the time, the base station may select to interrupt the receiving of the MBMS and hand over to another cell.

The above determination of a cause of a connection failure is an embodiment of the present disclosure only, and the present disclosure is not limited thereto.

The above manner of correcting or avoiding a connection failure is an embodiment of the present disclosure only, and other manners are not excluded, and a corresponding manner may be employed according to an actual situation.

### Embodiment 5

Fig. 5 is a flowchart of a method for determining a cause of a connection failure of Embodiment 5 of the present disclosure. At a network side, for a base station forwarding information, as shown in Fig. 5, the method includes:
step 501: receiving, by a base station at a network side, information transmitted by UE or other base stations at the network side;
in this embodiment, detailed contents of the above information are as described in embodiments 1 and 3, and shall not be described herein any further;
step 502: ignoring the information or transmitting the information to the network side;
in this embodiment, if the base station is not a base station finally determining a cause of the connection failure, the information is transmitted to the network side after the base station receives the above information, and may be transmitted to a base station finally determining a cause of the connection failure directly or indirectly via the network.

### Embodiment 6

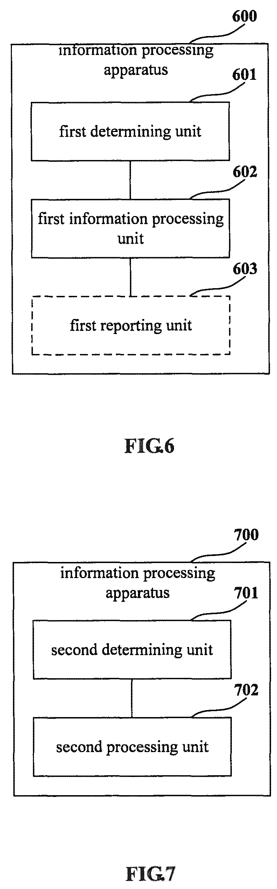

Fig. 6 is a schematic diagram of a structure of an information processing apparatus of Embodiment 6 of the present disclosure. As shown in Fig. 6, the apparatus 600 includes a first determining unit 601 and a first information processing unit 602; wherein,
the first determining unit 601 is configured to determine whether a connection failure occurs;
and the first information processing unit 602 is configured to record related information when a determination result of the first determining unit 601 is yes; wherein, the information is as described in Embodiment 1, and shall not be described herein any further.

In this embodiment, as shown in Fig. 6, the apparatus 600 may further include a first reporting unit 603 configured to report the recorded information to a network side after the UE is reconnected to the network.

In this embodiment, the first reporting unit 603 is optional, and reports the information only after the UE is reconnected to the network.

In this embodiment, a predetermined period of time contained in the above recorded information may be configured by the network side or predefined. Hence, the apparatus 600 may further include a parameter acquiring unit (not shown) configured to acquire the predetermined period of time configured by the network side, or to preset the predetermined period of time.

In this embodiment, an operation process of the apparatus 600 is as described in Embodiment 1, and shall not be described herein any further.

It can be seen from the above embodiment that the terminal side may transmit the related information of the connection failure to the network side, so that the network side accurately determines the cause of the connection failure after obtaining the above information, and takes corresponding measures to correct or avoid a connection failure, thereby solving the problem existing in an existing mechanism.

### Embodiment 7

Fig. 7 is a schematic diagram of a structure of an information processing apparatus of Embodiment 7 of the present disclosure. As shown in Fig. 7, the apparatus 700 includes a second determining unit 701 and a second information processing unit 702; wherein,
the second determining unit 701 is configured to determine whether a current connection failure is resulted from in-device coexistence interference or from continuous receiving of an MBMS, or whether UE transmits information related to in-device coexistence interference or information on assisting a network side in ensuring continuous receiving of an MBMS before the occurrence of the current connection failure; and the second processing unit 702 is configured to ignore the current connection failure when a determination result of the second determining unit 701 is yes.

In this embodiment, the second processing unit 702 is further configured to record no information when the current connection failure is ignored.

In this embodiment, an operation process of the apparatus 700 is as described in Embodiment 2, and shall not be described herein any further.

It can be seen from the above embodiment that the UE does not record the above information and does not report the above information to the network side, thereby ensuring that the network side will not be affected by in-device coexistence interference or continuous receiving of an MBMS in determining a cause of connection failure.

### Embodiment 8

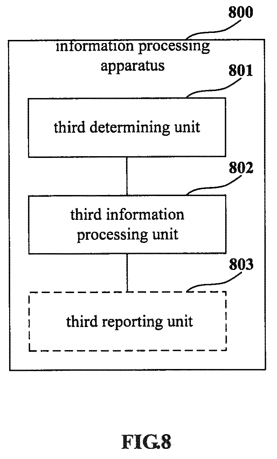

Fig. 8 is a schematic diagram of a structure of an information processing apparatus of Embodiment 8 of the present disclosure. As shown in Fig. 8, the apparatus 800 includes a third determining unit 801 and a third information processing unit 802; wherein functions of the third determining unit 801 are similar to those of the second determining unit 701, and shall not be described herein any further;
and the third information processing unit 802 is configured to record related information of a current connection failure when a determination result of the third determining unit 801 is yes.

In this embodiment, the related information of the current connection failure is as described in Embodiment 3, and shall not be described herein any further.

In this embodiment, the related information of the current connection failure recorded by the third information processing unit 802 is: replacing connection failure information stored by the UE, or not replacing connection failure information stored by the UE. Details are as described in Embodiment 3, and shall not be described herein any further.

In this embodiment, the apparatus 800 may further include a third reporting unit 803 which are similar to those of the first reporting unit 703, the third reporting unit 803 is optional, and shall not be described herein any further.

In this embodiment, an operation process of the apparatus 800 is as described in Embodiment 3, and shall not be described herein any further.

It can be seen from the above embodiment that the terminal side may transmit the related information of the connection failure to the network side, so that the network side forwards the above information to the base station finally determining a cause of the connection failure and correcting network parameters from which the connection failure is resulted after receiving the above information, for the base station to accurately determine the cause of the connection failure, and take corresponding measures to correct or avoid a connection failure, thereby solving the problem existing in an existing mechanism.

In the above embodiment, the components of the above information processing apparatuses 600-800 may be partially or entirely combined, which shall not be described herein any further.

### Embodiment 9

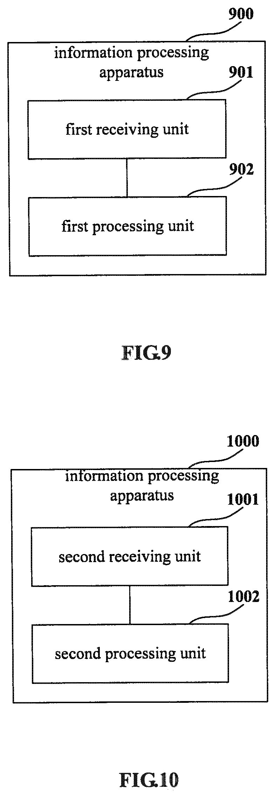

Fig. 9 is a schematic diagram of a structure of an information processing apparatus of Embodiment 9 of the present disclosure. As shown in Fig. 9, the apparatus 900 includes a first receiving unit 901 and a first processing unit 902; wherein,
the first receiving unit 901 is configured to receive information transmitted by UE or other base stations at a network side; wherein, details of the information are as described in Embodiment 4 (including the information in embodiments 1 and/or 3), which shall not be described herein any further;
and the first processing unit 902 is configured to take the received information as a factor for assisting the network side in correcting or avoiding a connection failure, or ignore the received information.

In this embodiment, a processing method of the first processing unit 902 is as described in Embodiment 4 (corresponding to step 402), which shall not be described herein any further.

In this embodiment, the apparatus 900 corresponds to a base station finally determining a cause of the connection failure and correcting network parameters.

The information received by the first receiving unit 901 may include the information described in Embodiment 1 and/or Embodiment 3, which shall not be described herein any further. And the first receiving unit 901 may receive the information directly from the UE, or from other base stations at the network side.

In this embodiment, an operation process of the apparatus 900 is as described in Embodiment 4, and shall not be described herein any further.

The above manner of correcting or avoiding a connection failure is an embodiment of the present disclosure only, and other manners are not excluded, and a corresponding manner may be employed according to an actual situation.

### Embodiment 10

Fig. 10 is a schematic diagram of a structure of an information processing apparatus of Embodiment 10 of the present disclosure. At a base station not finally determining a cause of connection failure, as shown in Fig. 10, the apparatus 100 includes: a second receiving unit 1001 and a second processing unit 1002; wherein,
the second receiving unit 1001 is configured to receive information transmitted by UE; wherein details of the information are as described in Embodiment 4 (including the information in embodiments 1 and/or 3), which shall not be described herein any further;
if the base station is not a base station finally determining a cause of connection failure, the base station will transmit the information to the network side, and the information will be finally obtained by a base station finally determining a cause of connection failure.

Thus, the apparatus 1000 may further include a second processing unit 1002 configured to transmit the information to the network side, or directly ignore the information.

In this embodiment, an operation process of the apparatus 1000 is as described in Embodiment 5, and shall not be described herein any further.

It can be seen from the above embodiment that the network side may obtain the related information of the connection failure transmitted by the terminal side, and transmits the information to a base station finally determining a cause of connection failure, so that the base station finally determining a cause of connection failure corrects or avoids occurrence of a connection failure based on the above information.

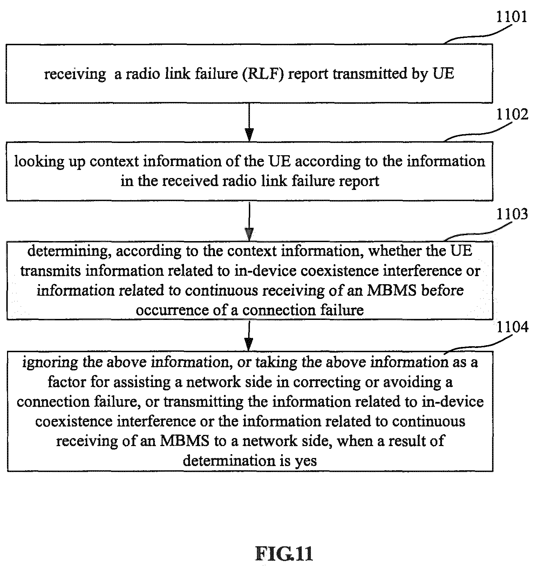

Fig. 11 is a flowchart of a method for determining a cause of a connection failure of Embodiment 11 of the present disclosure. As shown in Fig. 11, the method includes:
step 1101: receiving, by a first base station, a radio link failure (RLF) report transmitted by UE;
step 1102: looking up context information of the UE according to the information in the received radio link failure report;
for example, the first base station may look up ID of the UE in the RLF report which is reported by the UE, and look up the context information of the UE according to the ID information; however, it is not limited to the ID, and may also be other information;
step 1103: determining, according to the context information, whether the UE transmits information related to in-device coexistence interference or whether the UE transmits information related to continuous receiving of an MBMS before occurrence of a connection failure;
in this embodiment, the first base station may look up whether the above information exists in the context information; and if yes, it may be determined that the UE transmits the information related to in-device coexistence interference or transmits the information related to continuous receiving of an MBMS; otherwise, the UE does not transmit the information related to in-device coexistence interference or does not transmit the information related to continuous receiving of an MBMS;
step 1104: ignoring the above information, or taking the above information as a factor for assisting a network side in correcting or avoiding a connection failure, or transmitting the information related to in-device coexistence interference or the information related to continuous receiving of an MBMS to a network side, when a result of determination is yes;
in this embodiment, the information related to in-device coexistence interference includes: indication information indicating that the UE transmits information related to in-device coexistence interference before the connection failure, and/or information set in an InDeciveCoexindication message; and the information related to continuous receiving of an MBMS includes: indication information indicating that the UE transmits MBMS interest indication before the connection failure, and/or information set in an MBMSInterestIndication message.

In the above embodiment, the first base station may be a base station not finally determining a cause of connection failure, and may ignore the above information in step 1104, or transmits the information related to the in-device coexistence interference or the information related to continuous receiving of an MBMS to the network side.

In the above embodiment, the first base station may also be a base station finally determining a cause of connection failure, and may ignore the above information in step 1104, or take the above information as a factor for assisting the network side in correcting or avoiding a connection failure, details being as described in Embodiment 4, which shall not be described herein any further.

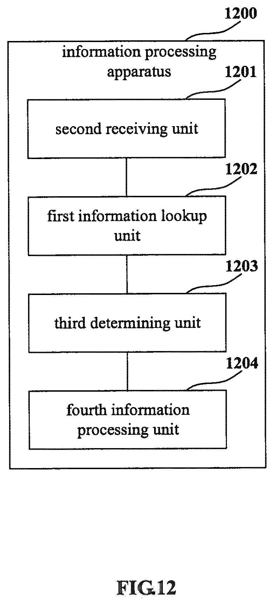

Fig. 12 is a schematic diagram of a structure of an information processing apparatus of Embodiment 12 of the present disclosure. As shown in Fig. 12, the apparatus 1200 includes: a second receiving unit 1201, a first information lookup unit 1202, a third determining unit 1203 and a fourth information processing unit 1204; wherein,
the second receiving unit 1201 is configured to receive a radio link failure report transmitted by UE; the first information lookup unit 1202 is configured to look up context information of the UE according to the information in the received radio link failure report; the third determining unit 1203 is configured to determine, according to the context information, whether the UE transmits information related to in-device coexistence interference or whether the UE transmits information related to continuous receiving of an MBMS before occurrence of a connection failure; and the fourth information processing unit 1204 is configured to ignore the above information, or transmit the information related to in-device coexistence interference or the information related to continuous receiving of an MBMS to the network side, when a determination result of the third determining unit 1203 is yes.

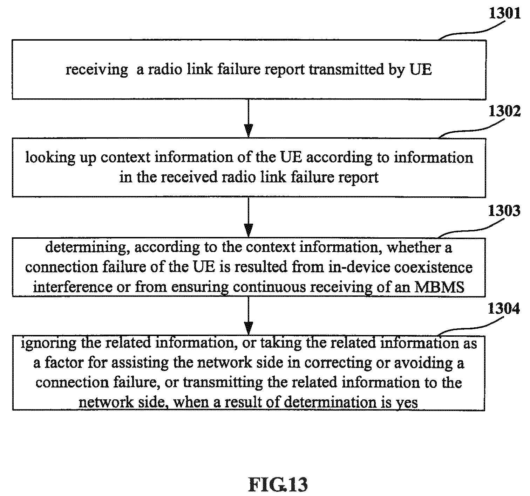

Fig. 13 is a flowchart of a method for determining a cause of a connection failure of Embodiment 13 of the present disclosure. As shown in Fig. 13, the method includes:
step 1301: receiving, by a first base station, a radio link failure report transmitted by UE;
step 1302: looking up context information of the UE according to information in the received radio link failure report;
this step is similar to step 1102, and shall not be described herein any further;
step 1303: determining, according to the context information, whether a connection failure of the UE is resulted from in-device coexistence interference or from ensuring continuous receiving of an MBMS;
in this embodiment, the first base station may look up whether information on the following exists in the context information, i.e. that the UE transmits information related to in-device coexistence interference or the UE transmits information related to continuous receiving of an MBMS; if the above information exists, the first base station determines whether the connection failure of the UE is resulted from in-device coexistence interference or from ensuring continuous receiving of an MBMS combined with the related measurement result; and any existing manner of determination may be employed, and what described above is an example only;
step 1304: ignoring the related information, or taking the related information as a factor for assisting the network side in correcting or avoiding a connection failure, or transmitting the related information to the network side, when a result of determination is yes; wherein, the related information includes:
   when it is determined that the connection failure is resulted from in-device coexistence interference, the related information comprises: indication information indicating that the UE transmits information related to in-device coexistence interference before the connection failure, and/or indication information indicating that the connection failure is resulted from in-device coexistence interference, and/or information set in an InDeciveCoexindication message;
   and when it is determined that the connection failure is resulted from ensuring continuous receiving of an MBMS, the related information includes: indication information indicating that the UE transmits MBMS interest indication before the current connection failure, and/or indication information indicating that the connection failure is resulted from ensuring continuous receiving of an MBMS, and/or information set in an MBMSInterestIndication message.

In this embodiment, the information set in the InDeciveCoexindication message includes: a list of frequencies of in-device coexistence interference, and/or TDM assistant information; and the information set in the MBMSInterestIndication message includes: a list of frequencies providing a user-interested MBMS, and/or an indicator indicating priorities of an MBMS and unicast services.

Similar to the case in Embodiment 12, the first base station may be a base station not finally determining a cause of connection failure, and may ignore the above information in step 1304, or transmits the information related to the in-device coexistence interference or the information related to continuous receiving of an MBMS to the network side.

In the above embodiment, the first base station may also be a base station finally determining a cause of connection failure, and may ignore the above information in step 1304, or take the above information as a factor for assisting the network side in correcting or avoiding a connection failure, details being as described in Embodiment 4, which shall not be described herein any further.

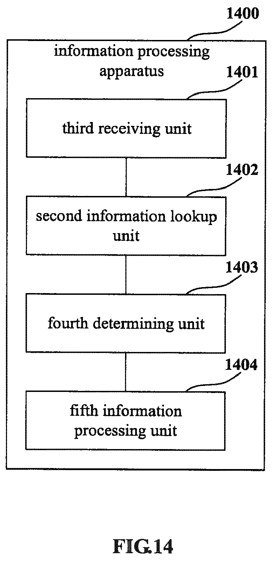

Fig. 14 is a schematic diagram of a structure of an information processing apparatus of Embodiment 14 of the present disclosure. As shown in Fig. 14, the apparatus 1400 includes: a third receiving unit 1401, a second information lookup unit 1402, a fourth determining unit 1403 and a fifth information processing unit 1404; wherein,
the third receiving unit 1401 is configured to receive a radio link failure report transmitted by UE; the second information lookup unit 1402 is configured to look up context information of the UE according to the information in the received radio link failure report; the fourth determining unit 1403 is configured to determine, according to the context information, whether a connection failure of the UE is resulted from in-device coexistence interference or from ensuring continuous receiving of an MBMS; and the fifth information processing unit 1404 is configured to ignore related information, or take related information as a factor for assisting a network side in correcting or avoiding the connection failure, or transmit related information to a network side, when a determination result is yes; wherein, the related information includes:
when it is determined that the connection failure is resulted from in-device coexistence interference, the related information comprises: indication information indicating that the UE transmits information related to in-device coexistence interference before the connection failure, and/or indication information indicating that the connection failure is resulted from in-device coexistence interference, and/or information set in an InDeciveCoexindication message;
and when it is determined that the connection failure is resulted from ensuring continuous receiving of an MBMS, the related information includes: indication information indicating that the UE transmits MBMS interest indication before the current connection failure, and/or indication information indicating that the connection failure is resulted from ensuring continuous receiving of an MBMS, and/or information set in an MBMSInterestIndication message.

In this embodiment, the information set in the InDeciveCoexindication message includes: a list of frequencies of in-device coexistence interference, and/or TDM assistant information; and the information set in the MBMSInterestIndication message includes: a list of frequencies providing a user-interested MBMS, and/or an indicator indicating priorities of an MBMS and unicast services.

It can be seen from the above embodiment that the first base station may acquire the context information of the UE according to the information in the connection failure report, determine a cause of the connection failure or the related information of the connection failure according to the context information, and report the related information to a base station finally determining a cause of connection failure, so as to assist the base station in correcting or avoiding a connection failure.

### Embodiment 15

An embodiment of the present disclosure further provides UE, including the apparatus as described in Embodiment 6, and/or the apparatus as described in Embodiment 7, and/or the apparatus as described in Embodiment 8, a particular structure being as described in the above embodiments, which is incorporated herein.

### Embodiment 16

An embodiment of the present disclosure further provides a base station, including the apparatus as described in Embodiment 9, a particular structure being as described in Embodiment 9, which is incorporated herein.

### Embodiment 17

An embodiment of the present disclosure further provides a base station, including the apparatus as described in Embodiment 10, a particular structure being as described in Embodiment 10, which is incorporated herein.

### Embodiment 18

Embodiment 18 of the present disclosure further provides a communication system, including the UE as described in Embodiment 15.

In this embodiment, the communication system may further include the base station as described in Embodiment 16.

Furthermore, the communication system may include the base station as described in Embodiment 17.

### Embodiment 19

Embodiment 19 of the present disclosure further provides a base station, including the apparatus as described in Embodiment 12 or 14, a particular structure being as described in Embodiment 12 or 14, which is incorporated herein.

### Embodiment 20

Embodiment 20 of the present disclosure further provides a communication system, including the first base station as described in Embodiment 19.

Furthermore, in this embodiment, the communication system may include a second base station finally determining a cause of a connection failure configured to receive information of the first base station, ignore the information or take the information as a factor for correcting or avoiding a connection failure.

Furthermore, in this embodiment, the communication system may include UE configured to transmit a radio link failure report to the first base station.

### Embodiment 21

Embodiment 21 of the present disclosure further provides a method for triggering a measurement report, including:
triggering a measurement report of a neighboring cell providing an MBMS by UE when signal strength or signal quality of the neighboring cell providing an MBMS is greater than a first predetermined value, or a difference between signal strength or signal quality of the neighboring cell providing an MBMS and signal strength or signal quality of a serving cell is greater than a second predetermined value.

In this embodiment, the measurement report includes: information on the signal strength or signal quality of the neighboring cell providing an MBMS.

### Embodiment 22

Embodiment 22 of the present disclosure further provides a method for triggering a measurement report, including:
containing, by UE, signal strength or signal quality of a neighboring cell providing an MBMS in a measurement report of a neighboring cell with a frequency different from that of the neighboring cell providing an MBMS, for reporting to a network side, when the UE triggers the measurement report.

In Embodiment 21 or 22, the UE reports the related information to a source base station. Thus, the source base station avoids a connection failure resulted from ensuring continuous receiving of an MBMS according to the received information.

For example, if the base station finds that the signal strength or signal quality of the neighboring cell providing an MBMS is relatively good after receiving the measurement result of the cell, the base station may select to hand over the UE to this cell, so as to ensure continuous receiving of an MBMS. And if the signal strength or signal quality of the cell is always relatively poor, the base station may consider not to ensure continuous receiving of an MBMS, but to hand over the UE to another cell.

### Embodiment 23

Embodiment 23 of the present disclosure further provides a method for triggering a measurement report, including:
reporting a measurement result of at least one cell by UE to a target base station, when the UE is handed over from a source cell to the target cell and interruption occurs in an MBMS of the UE, or when the UE is handed over from a source cell to the target cell, interruption occurs in an MBMS of the UE and the UE is aware that there exists a cell providing the interrupted MBMS in cells controlled by the target base station;
wherein the measurement result refers to a measurement result of other neighboring cell obtained by the UE when the UE triggers a measurement report of handover from the source cell to the target cell.

In this embodiment, the other neighboring cell includes the cell providing an MBMS.

In this embodiment, the UE reports the related information to the target base station. Hence, the target base station may forward the information to the source base station, and the source base station may avoid the connection failure resulted from ensuring continuous receiving of an MBMS according to the information.

For example, after the target base station transmits the measurement result of at least one cell reported by the UE to the source base station, if the measurement result shows that the signal strength or the signal quality of the neighboring cell providing an MBMS is relatively good when the UE is handed over from the source base station to the target base station, when the base station faces a case again where the UE needing to continuously receive an MBMS is handed over from the source base station to the target base station, the source base station may consider to hand over the UE to the neighboring cell providing an MBMS; and if the measurement result shows that the signal strength or the signal quality of the neighboring cell providing an MBMS is relatively poor when the UE is handed over from the source base station to the target base station, the source base station needs not to consider to hand over the UE to the neighboring cell providing an MBMS.

It can be seen from the above embodiment that the UE transmits the related information to the network side when certain conditions are met. Thus, after obtaining the related information, the network side may transmit or forward the above information to a base station finally determining a cause of a connection failure (i.e. the source base station), so as to avoid the connection failure resulted from ensuring continuous receiving of an interested MBMS.

### Embodiment 24

Embodiment 24 of the present disclosure further provides an apparatus for triggering a measurement report, including: a first triggering unit configured to trigger a measurement report of a neighboring cell providing an MBMS when signal strength or signal quality of the neighboring cell providing an MBMS is greater than a first predetermined value, or a difference between signal strength or signal quality of the neighboring cell providing an MBMS and signal strength or signal quality of a serving cell is greater than a second predetermined value.

In this embodiment, the measurement report comprises: information on the signal strength or signal quality of the neighboring cell providing an MBMS.

### Embodiment 25

Embodiment 25 of the present disclosure further provides an apparatus for triggering a measurement report, including: a second triggering unit configured to contain signal strength or signal quality of a neighboring cell providing an MBMS in a measurement report of a neighboring cell with a frequency different from that of the neighboring cell providing an MBMS, for reporting to a network side, when UE triggers the measurement report.

### Embodiment 26

Embodiment 26 of the present disclosure further provides an apparatus for triggering a measurement report, including: a third triggering unit configured to report a measurement result of at least one cell to a target base station, when UE is handed over from a source cell to the target cell and interruption occurs in an MBMS of the UE, or when UE is handed over from a source cell to the target cell, interruption occurs in an MBMS of the UE and the UE is aware that there exists a cell providing the interrupted MBMS in cells controlled by the target base station;
wherein the measurement result refers to a measurement result of other neighboring cell obtained by the UE when the UE triggers a measurement report of handover from the source cell to the target cell.

In this embodiment, the other neighboring cell includes the cell providing an MBMS.

### Embodiment 27

Embodiment 27 of the present disclosure further provides UE, including at least one apparatus as described in embodiments 24-26, a particular structure being as described in the above embodiments, which is incorporated herein.

### Embodiment 28

Embodiment 28 of the present disclosure further provides a communication system, including the UE as described in Embodiment 27, a particular structure being as described in the above embodiment, which is incorporated herein.

In this embodiment, the communication system may further include a base station configured to receive related information transmitted by UE, the related information being as described in embodiments 21-23, and being not going to be described herein any further.

If the base station is a source base station, the base station is further configured to avoid a connection failure resulted from ensuring continuous receiving of an MBMS according to the related information.

If the base station is not a base station finally determining a cause of a connection failure, the base station is further configured to transmit related information to a network side.

It can be seen from the above embodiment that the network side may received the related information transmitted by the UE. Hence, after obtaining the related information, the network side may forward the above information to a base station finally determining a cause of a connection failure, so as to avoid a connection failure resulted from ensuring continuous receiving of an interested MBMS.

An embodiment of the present disclosure further provides a computer-readable program, wherein when the program is executed in an information processing apparatus or UE, the program enables a computer to carry out the information processing methods as described in embodiments 1, 2 and 3 in the information processing apparatus or the UE.

An embodiment of the present disclosure further provides a storage medium in which a computer-readable program is stored, wherein the computer-readable program enables a computer to carry out the information processing method as described in embodiments 1, 2 and 3 in an information processing apparatus or UE.

An embodiment of the present disclosure further provides a computer-readable program, wherein when the program is executed in an information processing apparatus or a base station, the program enables a computer to carry out the information processing method as described in embodiments 4, 5, 11 and 13 in the information processing apparatus or the base station.

An embodiment of the present disclosure further provides a storage medium in which a computer-readable program is stored, wherein the computer-readable program enables a computer to carry out the information processing method as described in embodiments 4, 5, 11 and 13 in an information processing apparatus or a base station.

An embodiment of the present disclosure further provides a computer-readable program, wherein when the program is executed in an apparatus for triggering a measurement report or UE, the program enables the computer to carry out the method for triggering a measurement report as described in embodiments 21, 22 and 23 in the apparatus for triggering a measurement report.

An embodiment of the present disclosure further provides a storage medium in which a computer-readable program is stored, wherein the computer-readable program enables a computer to carry out the method for triggering a measurement report as described in embodiments 21, 22 and 23 in an apparatus for triggering a measurement report.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. An information processing method, comprising:
recording information on the following by UE when a connection failure occurs in the UE:
a cell of which a measurement report is triggered by the UE in a serving cell before occurrence of a current connection failure and/or within a predetermined period of time before an occurrence of a current connection failure; and/or
a time when the UE triggers a measurement report of a cell for the first time in a serving cell before the occurrence of a current connection failure and/or within a predetermined period of time before the occurrence of a current connection failure, and/or a time duration between triggering a measurement report of a cell for the first time and an occurrence of a current connection failure.

2. The method according to claim 1, wherein the predetermined period of time is configured by a network side or preset.

3. The method according to claim 1, wherein the method further comprises:
reporting the recorded information by the UE to a network side after the UE is reconnected to the network.

4. An information processing apparatus, comprising:
a first determining unit configured to determine whether a connection failure occurs; and
a first information processing unit configured to record information on the following when a determination result of the first determining unit is yes:
a cell of which a measurement report is triggered by the UE in a serving cell before the occurrence of a current connection failure and/or within a predetermined period of time before an occurrence of a current connection failure; and/or
a time when the UE triggers a measurement report of a cell for the first time in a serving cell before the occurrence of a current connection failure and/or within a predetermined period of time before the occurrence of a current connection failure, and/or a time duration between triggering a measurement report of a cell for the first time and an occurrence of a current connection failure.

5. The apparatus according to claim 4, wherein the apparatus further comprises:
a parameter acquiring unit configured to acquire the predetermined period of time configured by a network side, or to preset the predetermined period of time.

6. The apparatus according to claim 4, wherein the apparatus further comprises:
a first reporting unit configured to report the recorded information to a network side after the UE is reconnected to the network.

7. UE, comprising the apparatus as claimed in claim 4 or 5 or 6.

8. An information processing method, comprising:
ignoring a current connection failure or recording related information of a current connection failure by UE when the UE determines that the current connection failure is resulted from in-device coexistence interference or from ensuring continuous receiving of an MBMS, or the UE determines that the UE transmits information related to in-device coexistence interference or transmits information on assisting a network side in ensuring continuous receiving of an MBMS before the occurrence of the current connection failure.

9. The method according to claim 8, wherein when the UE ignores the current connection failure, the method further comprises: recording no information.

10. The method according to claim 8, wherein the recording related information of a current connection failure comprises: replacing connection failure information stored by the UE, or not replacing connection failure information stored by the UE.

11. The method according to claim 8, wherein the related information of a current connection failure comprises:
information of the current connection failure and/or information related to coexistence interference and/or information related to an MBMS interest.

12. The method according to claim 11, wherein the information related to coexistence interference comprises: indication information indicating that the current connection failure is resulted from in-device coexistence interference, and/or indication information indicating that the UE transmits information related to in-device coexistence interference before the connection failure, and/or information set in an InDeciveCoexindication message;
and the information related to an MBMS interest comprises: indication information indicating that the current connection failure is resulted from continuous receiving of an MBMS, and/or indication information indicating that the UE transmits information on assisting a network side in ensuring continuous receiving of an MBMS before the current connection failure, and/or information set in an MBMSInterestIndication message.

13. The method according to claim 12, wherein the information set in the InDeciveCoexindication message comprises: a list of frequencies of in-device coexistence interference, and/or TDM assistant information;
and the information set in the MBMSInterestIndication message comprises:
a list of frequencies providing a user-interested MBMS and/or an indicator indicating priorities of an MBMS and unicast services.

14. The method according to any one of claims 8-13, wherein the method further comprises:
reporting the recorded information by the UE to a network side after the UE is reconnected to the network.

15. An information processing apparatus, comprising:
a second determining unit configured to determine whether a current connection failure of UE is resulted from in-device coexistence interference or from ensuring continuous receiving of an MBMS, or whether the UE transmits information related to in-device coexistence interference or information on assisting a network side in ensuring continuous receiving of an MBMS before the occurrence of the current connection failure;
a second processing unit configured to ignore the current connection failure or record related information of the current connection failure when a determination result of the second determining unit is yes.

16. The apparatus according to claim 15, wherein the second processing unit records no information when ignoring the current connection failure.

17. The apparatus according to claim 15, wherein the related information of the current connection failure recorded by the second processing unit comprises:
replacing connection failure information stored by the UE, or not replacing connection failure information stored by the UE.

18. The apparatus according to claim 15, wherein the related information of the current connection failure comprises:
information of the current connection failure and/or information related to coexistence interference and/or information related to an MBMS interest.

19. The apparatus according to claim 18, wherein the information related to coexistence interference comprises:
indication information indicating that the current connection failure is resulted from in-device coexistence interference, and/or indication information indicating that the UE transmits information related to in-device coexistence interference before the connection failure, and/or information set in an InDeciveCoexindication message;
and the information related to an MBMS interest comprises:
indication information indicating that the current connection failure is resulted from the continuous receiving of an MBMS, and/or indication information indicating that the UE transmits information on assisting a network side in ensuring continuous receiving of an MBMS before the current connection failure, and/or information set in an MBMSInterestIndication message.

20. The apparatus according to claim 19, wherein the information set in the InDeciveCoexindication message comprises:
a list of frequencies of in-device coexistence interference, and/or TDM assistant information;
and the information set in the MBMSInterestIndication message comprises:
a list of frequencies providing a user-interested MBMS and/or an indicator indicating priorities of an MBMS and unicast services.

21. The apparatus according to any one of claims 15-20, wherein the apparatus further comprises:
a second reporting unit configured to report the recorded information to a network side after the UE is reconnected to the network.

22. UE, comprising the apparatus as claimed in any one of claims 15-21.

23. An information processing method, comprising:
receiving information transmitted by UE or other base stations at a network side, the information comprising one or more pieces of the following information:
information recorded by the UE when a connection failure occurs, wherein the recorded information includes: a cell of which a measurement report is triggered by the UE in a serving cell before an occurrence of a current connection failure and/or within a predetermined period of time before the occurrence of a current connection failure; and/or
a time when the UE triggers a measurement report of a cell for the first time in a serving cell before the occurrence of a current connection failure and/or within a predetermined period of time before the occurrence of a current connection failure, and/or a time duration between triggering a measurement report of a cell for the first time and an occurrence of a current connection failure,
and/or information recorded by the UE when the UE determines that the current connection failure is resulted from in-device coexistence interference or from ensuring continuous receiving of an MBMS, or the UE determines that the UE transmits information related to in-device coexistence interference or transmits information on assisting a network side in ensuring continuous receiving of an MBMS before the occurrence of the current connection failure, the information comprising related information of the current connection failure;
transmitting the received information to the network side, or ignoring the received information, or taking the information as a factor for assisting the network side in correcting or avoiding a connection failure.

24. The method according to claim 23, wherein the related information of the current connection failure comprises:
information of the current connection failure and/or information related to coexistence interference and/or information related to an MBMS interest.

25. The method according to claim 24, wherein the information related to coexistence interference comprises: indication information indicating that the current connection failure is resulted from in-device coexistence interference, and/or indication information indicating that the UE transmits information related to in-device coexistence interference before the connection failure, and/or information set in an InDeciveCoexindication message;
and the information related to an MBMS interest comprises: indication information indicating that the current connection failure is resulted from continuous receiving of an MBMS, and/or indication information indicating that the UE transmits information on assisting a network side in ensuring continuous receiving of an MBMS before the current connection failure, and/or information set in an MBMSInterestIndication message.

26. The method according to claim 25, wherein the information set in the InDeciveCoexindication message comprises: a list of frequencies of in-device coexistence interference, and/or TDM assistant information;
and the information set in the MBMSInterestIndication message comprises:
a list of frequencies providing a user-interested MBMS and/or an indicator indicating priorities of an MBMS and unicast services..

27. An information processing apparatus, comprising:
a first receiving unit configured to receive information transmitted by UE or other base stations at a network side, the information comprising one or more pieces of the following information:
information recorded by the UE when a connection failure occurs, wherein the recorded information includes: a cell of which a measurement report is triggered by the UE in a serving cell before an occurrence of a current connection failure and/or within a predetermined period of time before the occurrence of a current connection failure; and/or
a time when the UE triggers a measurement report of a cell for the first time in a serving cell before the occurrence of a current connection failure and/or within a predetermined period of time before the occurrence of a current connection failure, and/or a time duration between triggering a measurement report of a cell for the first time and an occurrence of a current connection failure,
and/or information recorded by the UE when the UE determines that the current connection failure is resulted from in-device coexistence interference or from ensuring continuous receiving of an MBMS, or the UE determines that the UE transmits information related to in-device coexistence interference or transmits information on assisting a network side in ensuring continuous receiving of an MBMS before the occurrence of the current connection failure, the information comprising related information of the current connection failure;
a third processing unit configured to transmit the received information to the network side, or ignore the received information, or take the related information of the current connection failure as a factor for assisting the network side in correcting or avoiding a connection failure.

28. The apparatus according to claim 27, wherein the related information of the current connection failure comprises:
information of the current connection failure and/or information related to coexistence interference and/or information related to an MBMS interest.

29. Abase station, comprising the apparatus as claimed in claim 27 or 28.

30. A communication system, comprising the UE as claimed in claim 7 and/or 22 and the base station as claimed in claim 29.

31. An information processing method, comprising:
receiving, by a first base station, a radio link failure report transmitted by UE;
looking up context information of the UE according to information in the received radio link failure report;
determining, according to the context information, whether the UE transmits information related to in-device coexistence interference or whether the UE transmits information related to continuous receiving of an MBMS before the occurrence of a connection failure; and
ignoring the information, or taking the information as a factor for assisting a network side in correcting or avoiding a connection failure, or transmitting the information related to in-device coexistence interference or the information related to continuous receiving of an MBMS to a network side, when a result of determination is yes;
wherein,
the information related to in-device coexistence interference comprises: indication information indicating that the UE transmits information related to in-device coexistence interference before the connection failure, and/or information set in an InDeciveCoexindication message;
and the information related to continuous receiving of an MBMS comprises: indication information indicating that the UE transmits information on assisting a network side in ensuring continuous receiving of an MBMS before the current connection failure, and/or information set in an MBMSInterestIndication message.

32. An information processing method, comprising:
receiving, by a first base station, a radio link failure report transmitted by UE;
looking up context information of the UE according to the information in the received radio link failure report;
determining, according to the context information, whether a connection failure of the UE is resulted from in-device coexistence interference or from ensuring continuous receiving of an MBMS;
ignoring related information, or taking related information as a factor for assisting a network side in correcting or avoiding the connection failure, or transmitting related information to a network side, when a determination result is yes;
wherein,
when it is determined that the connection failure is resulted from in-device coexistence interference, the related information comprises: indication information indicating that the UE transmits information related to in-device coexistence interference before the connection failure, and/or indication information indicating that the connection failure is resulted from in-device coexistence interference, and/or information set in an InDeciveCoexindication message;
and when it is determined that the connection failure is resulted from ensuring continuous receiving of an MBMS, the related information comprises: indication information indicating that the UE transmits information on assisting a network side in ensuring continuous receiving of an MBMS before the current connection failure, and/or indication information indicating that the connection failure is resulted from ensuring continuous receiving of an MBMS, and/or information set in an MBMSInterestIndication message.

33. The method according to claim 31 or 32, wherein the information set in the InDeciveCoexindication message comprises: a list of frequencies of in-device coexistence interference, and/or TDM assistant information;
and the information set in the MBMSInterestIndication message comprises: a list of frequencies providing a user-interested MBMS and/or an indicator indicating priorities of an MBMS and unicast services.

34. An information processing apparatus, comprising:
a second receiving unit configured to receive a radio link failure report transmitted by UE;
a first information lookup unit configured to look up context information of the UE according to the information in the received radio link failure report;
a third determining unit configured to determine, according to the context information, whether the UE transmits information related to in-device coexistence interference or whether the UE transmits information related to continuous receiving of an MBMS before an occurrence of a connection failure; and
a fourth information processing unit configured to ignore the information, or take related information as a factor for assisting a network side in correcting or avoiding a connection failure, or transmit the information related to in-device coexistence interference or the information related to continuous receiving of an MBMS to a network side, when a determination result of the third determining unit is yes;
wherein the information related to in-device coexistence interference comprises: indication information indicating that the UE transmits information related to in-device coexistence interference before the connection failure, and/or information set in an InDeciveCoexindication message;
and the information related to continuous receiving of an MBMS comprises: indication information indicating that the UE transmits information on assisting a network side in ensuring continuous receiving of an MBMS before the current connection failure, and/or information set in an MBMSInterestIndication message.

35. An information processing apparatus, comprising:
a third receiving unit configured to receive a radio link failure report transmitted by UE;
a second information lookup unit configured to look up context information of the UE according to the information in the received radio link failure report;
a fourth determining unit configured to determine, according to the context information, whether a connection failure of the UE is resulted from in-device coexistence interference or from ensuring continuous receiving of an MBMS; and
a fifth information processing unit configured to ignore related information, or take related information as a factor for assisting a network side in correcting or avoiding the connection failure, or transmit related information to a network side, when a determination result is yes;
wherein,
when it is determined that the connection failure is resulted from in-device coexistence interference, the related information comprises: indication information indicating that the UE transmits information related to in-device coexistence interference before the connection failure, and/or indication information indicating that the connection failure is resulted from in-device coexistence interference, and/or information set in an InDeciveCoexindication message;
and when it is determined that the connection failure is resulted from ensuring continuous receiving of an MBMS, the related information comprises: indication information indicating that the UE transmits information on assisting a network side in ensuring continuous receiving of an MBMS before the current connection failure, and/or indication information indicating that the connection failure is resulted from ensuring continuous receiving of an MBMS, and/or information set in an MBMSInterestIndication message.

36. The apparatus according to claim 34 or 35, wherein the information set in the InDeciveCoexindication message comprises: a list of frequencies of in-device coexistence interference, and/or TDM assistant information;
and the information set in the MBMSInterestIndication message comprises: a list of frequencies providing a user-interested MBMS and/or an indicator indicating priorities of an MBMS and unicast services.

37. Abase station, comprising the information processing apparatus as claimed in any one of claims 34-36.

38. A communication system, comprising UE for transmitting a radio link failure report, wherein the communication system further comprises the base station as claimed in claim 38.

39. A method for triggering a measurement report, comprising:
triggering a measurement report of a neighboring cell providing an MBMS by UE when signal strength or signal quality of the neighboring cell providing an MBMS is greater than a first predetermined value, or a difference between signal strength or signal quality of the neighboring cell providing an MBMS and signal strength or signal quality of a serving cell is greater than a second predetermined value.

40. The method according to claim 39, wherein the measurement report comprises:
information on the signal strength or signal quality of the neighboring cell providing an MBMS.

41. A method for triggering a measurement report, comprising:
containing, by UE, signal strength or signal quality of a neighboring cell providing an MBMS in a measurement report of a neighboring cell with a frequency different from that of the neighboring cell providing an MBMS, for reporting to a network side, when the UE triggers the measurement report.

42. A method for triggering a measurement report, comprising:
reporting a measurement result of at least one cell by UE to a target base station, when the UE is handed over from a source cell to the target cell and interruption occurs in an MBMS of the UE, or when the UE is handed over from a source cell to the target cell, interruption occurs in an MBMS of the UE and the UE is aware that there exists a cell providing the interrupted MBMS in cells controlled by the target base station;
wherein the measurement result refers to a measurement result of other neighboring cell obtained by the UE when the UE triggers a measurement report of handover from the source cell to the target cell.

43. The method according to claim 42, wherein the other neighboring cell comprises the cell providing an MBMS.

44. An apparatus for triggering a measurement report, comprising:
a first triggering unit configured to trigger a measurement report of a frequency or a cell providing an MBMS when signal strength or signal quality of the neighboring cell providing an MBMS is greater than a first predetermined value, or signal strength or signal quality of the neighboring cell providing an MBMS and signal strength or signal quality of a serving cell is greater than a second predetermined value.

45. The apparatus according to claim 44, wherein the measurement report comprises: information on the signal strength or signal quality of the neighboring cell providing an MBMS.

46. An apparatus for triggering a measurement report, comprising:
a second triggering unit configured to contain signal strength or signal quality of a neighboring cell providing an MBMS in a measurement report of a neighboring cell with a frequency different from that of the neighboring cell providing an MBMS, for reporting to a network side, when UE triggers the measurement report.

47. An apparatus for triggering a measurement report, comprising:
a third triggering unit configured to report a measurement result of at least one cell to a target base station, when UE is handed over from a source cell to the target cell and interruption occurs in an MBMS of the UE, or when UE is handed over from a source cell to the target cell, interruption occurs in an MBMS of the UE and the UE is aware that there exists a cell providing the interrupted MBMS in cells controlled by the target base station;
wherein the measurement result refers to a measurement result of other neighboring cell obtained by the UE when the UE triggers a measurement report of handover from the source cell to the target cell.

48. The apparatus according to claim 47, wherein the other neighboring cell comprises the cell providing an MBMS.

49. UE, comprising the apparatus for triggering a measurement report as claimed in any one of claims 44-48.

50. A communication system, comprising the UE as claimed in claim 49, wherein the communication system further comprises a base station receiving a measurement report triggered by the UE.

51. A computer-readable program, wherein when the program is executed in an information processing apparatus or UE, the program enables a computer to carry out the information processing method as claimed in any one of claims 1-3 and 8-14 in the information processing apparatus or the UE.

52. A storage medium in which a computer-readable program is stored, wherein the computer-readable program enables a computer to carry out the information processing method as claimed in any one of claims 1-3 and 8-14 in an information processing apparatus or UE.

53. A computer-readable program, wherein when the program is executed in an information processing apparatus or a base station, the program enables a computer to carry out the information processing method as claimed in any one of claims 23-26 and 31-33 in the information processing apparatus or the base station.

54. A storage medium in which a computer-readable program is stored, wherein the computer-readable program enables a computer to carry out the information processing method as claimed in any one of claims 23-26 and 31-33 in an information processing apparatus or a base station.

55. A computer-readable program, wherein when the program is executed in an apparatus for triggering a measurement report or UE, the program enables a computer to carry out the method for triggering a measurement report as claimed in any one of claims 39-43 in the apparatus for triggering a measurement report or the UE.

56. A storage medium in which a computer-readable program is stored, wherein the computer-readable program enables a computer to carry out the method for triggering a measurement report as claimed in any one of claims 39-43 in an apparatus for triggering a measurement report or UE.
